# EUROPEAN PATENT SPECIFICATION

(11) **EP 0 348 219 B1**
(45) Date of publication and mention of the grant of the patent: **18.09.1996**
(21) Application number: 89306381.8
(22) Date of filing: 23.06.1989
(51) Int. Cl.: C08K 3/22, C08K 5/09, C09F 1/04, C09J 201/08, C08L 93/04

(54) **Hot melt adhesives containing stabilized rosin esters and methods for their production**
Heisschmelzklebstoffe enthaltend stabilisierte Kolophoniumester und Verfahren zu deren Herstellung
Adhésifs thermofusibles contenant des esters de colophone stabilisés et procédure pour leur production

(30) Priority: 24.06.1988 US 211499
(43) Date of publication of application: 27.12.1989
(73) Proprietor: Union Camp Corporation, Wayne New Jersey 07470 - 2066 (US)
(72) Inventor: Johnson, Robert W., Jr., Savannah, GA 31405 (US); Krajca, Kenneth E., Savannah, GA 31405 (US)
(74) Representative: Jones, Helen Marjorie Meredith

(56) References cited:
- US-A- 3 912 709
- US-A- 4 168 253
- US-A- 4 248 770
- US-A- 4 302 371

## Description

This invention relates to rosin ester based hot melt adhesives and, more specifically, to the stabilization of such adhesives with zinc salts.

Rosin is the common resin of several varieties of the pine tree. It is mainly a mixture of seven different twenty-carbon monocarboxylic acids and other minor components. The rosins to which this invention relates include gum rosin, wood rosin, and tall oil rosin or the rosin acids contained therein, such as abietic acid.

It is possible to esterify rosin; the resulting rosin esters have numerous applications, including many in the adhesives industry. For example, rosin esters impart wetting and hot tack to commercial hot melt adhesives; ethylene-vinyl acetate (EVA) based hot melt adhesives often contain up to 65% rosin ester as a tackifier. Rosin esters are also used in solvent-based and water-based adhesive systems.

Several factors generally govern the choice of a rosin ester in an EVA-based hot melt adhesive system. Two major factors are the compatibility of the rosin ester with other components of the system and the effect the rosin ester has on the viscosity stability of the system.

The compatibility of a given rosin ester with other components in hot melt adhesives depends upon a number of factors relating to the process and reagents used in making the ester. Clarity is a desired property for hot melt adhesives; good compatibility is indicated when a hot melt adhesive is clear upon formulation and remains free of haze during thermal aging.

It is also desirable that the viscosity of a hot melt adhesive remain stable for a commercially reasonable period after it is formulated. Viscosity stability, like compatibility, is affected by the process and reagents used to synthesize the rosin ester tackifier, with a commercially significant variation of viscosity over time indicating poor viscosity stability.

Although the particular process and reagents used to synthesize a given rosin ester intimately affect both compatibility and viscosity stability for a hot melt adhesive, those conditions which contribute to good compatibility are not necessarily the same as those which contribute to good viscosity stability. On the contrary, in many cases the conditions which lead to acceptable viscosity stability result in poor compatibility. For example, the esterification of many rosin esters is catalyzed by mineral acid esters and by mineral acids such as phosphorus oxy-acids. Mineral acid esters can be transformed into mineral acids and can thus serve as latent acid catalysts. Rosin esters synthesized with both types of acid catalysts often have excellent compatibility with a wide range of EVA-based hot melt adhesives if the resultant residual acidity in the product is not neutralized. However, the viscosity stability of such un-neutralized systems is usually very poor due to acid-catalyzed degradation of the EVA. Viscosity stability may be achieved for such systems by reducing their acidity. One method for reducing acidity is to treat rosin esters with alkali metal hydroxides. US-A-4,548,746, Duncan, et al., for example, teaches the use of sodium hydroxide in this regard. However, the hot melt adhesives incorporating esters so neutralized are usually hazy, either upon formulation or upon thermal aging, indicating poor compatibility. Some improvement over sodium hydroxide is seen by neutralization with calcium acetate, but serious hazing problems still remain. Organic amines also neutralize the ester acidity, but impart dark color and haze to hot melt adhesive systems.

Although US-A-4,168,253 and 4,284,543, each in the name of Hollis, teach the use of a lithium salt to extend molten stability in hot melt adhesive compositions, lithium salts generally impart darker color and higher levels of haze than is commercially desirable.

US-A-4,725,384, Du Vernet, teaches a process for esterifying rosin with a polyhydric alcohol in the presence of a catalytic amount of phosphinic acid. Magnesium salts of organic acid are used in this process to neutralize the acidity contained therein. Rosin esters synthesized in this manner are said to improve the clarity and viscosity stability of EVA-based hot melt adhesives into which they are incorporated as tackifiers. The patent specifically teaches the use of magnesium acetate to neutralize the acidity of an ester so synthesized. Such improved rosin esters provide, to corresponding hot melt adhesive formulations, improvement in both compatibility and viscosity stability. Du Vernet also discloses the inoperability of the corresponding calcium salt for this purpose.

It is still desired to provide improved rosin ester compositions comprising rosins esterified with polyhydric alcohols wherein the resulting compositions may be added to hot melt adhesives and other materials to provide such adhesives having a diminished tendency towards hazing and improved viscosity stability.

Accordingly, it is an object of this invention to provide methods for the production of rosin esters with substantial or total neutralization of any inorganic acid employed in their synthesis.

A further object is to provide rosin esters which impart to hot melt adhesives good tackification without significant hazing or instabilities in viscosity.

A further object of the invention is to provide improved rosin esters which have good utility as tackifiers and otherwise and which have all or part or their acidic components neutralized. Yet another object is to improve the physical and physicochemical properties of rosin esters and improved tackifiers for hot melt and other adhesives produced therefrom.

These and other objects of the invention will become apparent to persons of ordinary skill in the art from a review of the present specification and appended claims.

### Summary of the Invention

It has been found in accordance with this invention that zinc salts, preferably zinc salts of organic acids, can be used to good effect to neutralize excess acidity in rosin ester formulations and that the incorporation of such zinc neutralized rosin ester formulations as tackifiers in hot melt adhesive systems results in adhesives with compatibility and viscosity stability properties superior to hot melt adhesives employing unneutralized rosin esters.

Accordingly, this invention is directed to the use of zinc compounds such as zinc oxide, zinc hydroxide, zinc salts of organic acids, and mixtures thereof to neutralize residual acid catalyst in a rosin ester composition formed by the acid-catalysed esterification of rosin with alcohol, thereby providing an improved rosin ester composition.

Methods for the production of improved rosin esters are provided in accordance with this invention, comprising the steps of esterifying rosin with polyhydric alcohol and admixing with the esterified rosin a zinc compound selected from the group consisting of zinc hydroxides, zinc salts of organic acids, and mixtures thereof. The amount of the zinc compound is selected to be an amount effective to neutralize mineral acids which may be present in the esterified rosin to a degree sufficient to improve the physical and chemical properties of the rosin esters and adhesives prepared from such esters. Preferably the amount of the zinc composition admixed is sufficient to neutralize a major portion of any residual mineral acid catalyst present in the rosin ester composition.

In accordance with the invention, it is possible either to formulate the rosin esters in accordance with methods whereby zinc compositions are added during or subsequent to the esterification step. Alternatively, the zinc compositions disclosed herein as being useful in the practice of the invention may be added to previously-prepared rosin esters to secure improvement in their properties.

In accordance with preferred embodiments of the invention, zinc salts of organic acids are employed for the acid neutralization function. It is preferred that zinc salts of rosin be so employed.

The zinc compositions of this invention are selected both for their capacity to neutralize residual acidity present in many commercially-synthesized rosin esters and for their compatibility with other components of hot melt adhesive formulations into which such rosin esters are incorporated. Much experimentation has been conducted in the hot melt adhesive industry to simultaneously achieve such compatibility together with viscosity stability. The wide variety of metal salts tested have exhibited markedly disparate capacities to both neutralize acidity and achieve compatibility with other hot melt adhesive components. The results of this research have been far from predictable; for example, US-A-4,725,384, Du Vernet, notes that calcium acetate failed to perform as well as magnesium acetate in this regard, despite the close chemical similarity of the respective divalent metal cations. Thus it is not expected that zinc compositions as taught in this invention would be useful for this role.

It is believed that a wide variety of zinc compositions may be useful herein, including zinc oxide and zinc hydroxide. The preferred compositions for use in this invention, however, are zinc salts of organic acid which can effectively neutralize residual acidity in rosin esters to be employed, e.g. in hot melt adhesive systems. Preferred examples of such organic salts are the zinc salts of rosin and the zinc salts of organic acids such as abietic, acetic, adipic, benzoic, butyric, capric, caproic, caprylic, carbonic, citric, dehydroabietic, dihydroabietic, formic, lactic, lauric, levopimaric, linoleic, linolenic, myristic, oleic, palmitic, phthalic, proprionic, and valeric acid. Most preferred are the zinc salts of rosin, also known as zinc resinate.

The preferred degree of neutralization affected by the compositions of this invention is between twenty-five and one-hundred percent of the residual acid catalysts which may be present, with fifty to seventy-five percent being especially preferred to achieve an optimization of both compatibility and viscosity stability. The addition of an amount of zinc composition in excess of that necessary to effect 75% or even total neutralization can also give favorable results. Persons of skill in the art will have no difficulty in determining the degree of such neutralization from knowledge of the residual acid catalyst present in rosin ester formulations. It is preferred that rosin ester formulations be tested to ascertain their acid catalyst content and that an amount of zinc composition be added thereto to effect the desired degree of neutralization.

The rosin materials to which this invention relates may be subject to one or more other treatments before their employment in this invention. Representative treatments comprise distillation, disproportionation, hydrogenation, and polymerization. Thus, as will be appreciated, the known processing steps for preparing rosin esters may be employed together with the improvements of this invention.

Advantageously, this invention should be practiced in an inert atmosphere. Since light color is a desirable property for rosin esters and color is sensitive to oxygen exposure, such exposure should be minimized.

In preferred embodiments of this invention, zinc organic salts are prepared by mixing zinc oxide with the organic acid or acids in a solvent such as toluene. Where the organic acid comprises abietic acid, dehydroabietic acid, dihydroabietic acid, or rosin, the corresponding salt is generally characterized as a zinc resinate. The zinc salts thus prepared are conveniently added with mixing to molten rosin ester. The resultant rosin ester formulation is allowed to cool and is then suitable for use, such as incorporation into hot melt adhesives. Other means of formulation, such as in other solvents, may also be used.

It has also been found that certain organic tin compounds may effectively neutralize residual acid in rosin ester tackifiers. For example, dibutyl tin oxide at a level of 0.05% to 0.1% gives viscosity stability that is greatly improved as compared with a tackifier that has not been neutralized. Other tin compounds are also expected to be useful.

The invention is further described in the following examples wherein parts and percents are by weight unless otherwise specified.

### EXAMPLE 1

### Preparation of Zinc Resinate

A 1.0 liter flask was set up in a fume hood with an agitator, a nitrogen purge, and a solvent condensation and return system. To the flask was charged 250 g Unitol NCY (Union Camp) tall oil rosin. The flask was heated until the acid was molten, agitation was then commenced, about 125 g of toluene was added and the flask was cooled to about 95°C. A slurry of 14.5 g zinc oxide, 125 g toluene, and 1.5 g water was slowly added. The flask was equipped with an azeotropic water trap, then heated until the water was driven off and the reaction mixture became clear. The flask was then allowed to cool and its contents transferred to a glass jar as zinc resinate, containing approximately 50% solids.

### EXAMPLE 2

### Preparation of Neutralized Rosin Ester

Five 1.0 liter flasks with agitators and nitrogen purges were set up in a fume hood. To each of the flasks was charged 300 g pentaerythritol tall oil ester, which was prepared using 0.1% phosphorous acid as catalyst in accordance with US-A-4,690,783, Johnson, Jr. The flasks were heated until the ester was molten; agitation was then commenced. To each of the flasks was slowly added zinc resinate prepared as in Example 1. The respective amounts added were 1.9, 3.8, 5.7, 7.6, and 8.4 g, in order to effect corresponding 25%, 50%, 75%, 100% and 110% neutralizations of residual mineral acid. The toluene was removed and the resin discharged into a pan.

### EXAMPLE 3

### Preparation of Hot Melt Adhesive

Five ten ounce, unlined, tin-plate cans with agitators were set up in a fume hood. To each can was charged 100 g of one of the neutralized rosin esters of Example 2, along with 40 g Be Square 185 (Petrolite) microcrystalline wax. The cans were heated until the contents were molten; agitation was then commenced and 60 g Elvax 250 (DuPont) ethylene-vinyl acetate slowly added to each. The mixtures were stirred until homogeneous.

A 10 g sample was taken from each can; the cans were then placed in a 350°C forced air oven for 96 hours. The samples were tested for color (Gardner 50T) and viscosity (CP on Brookfield Thermocell Viscometer). The cans in the oven were periodically monitored for clarity. After 96 hours, another 10 g sample was taken from each can then tested for color and viscosity. The data were compared to data obtained using a rosin ester which had not been neutralized as set forth in Example 2; such data are given in the following table.

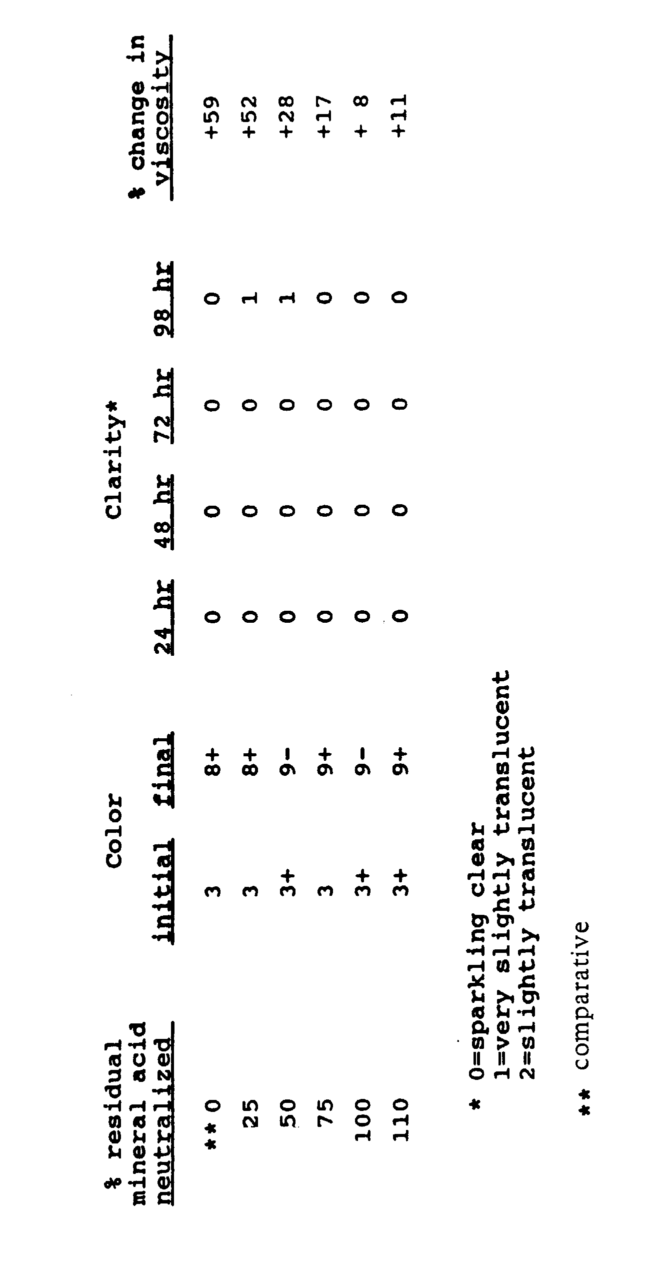

As can readily be seen from the foregoing data, the addition of zinc resinate to the hot melt adhesive systems did not have an appreciably negative effect on color, with initial readings consistently in the "three" range and final readings in the "nine" range. Clarity was also impacted minimally, as relatively clear hot melt adhesive samples were obtained even at higher levels of resinate. While the negative effects of added zinc resinate were minimal, the improvement in viscosity stability, as reflected in percentage change in viscosity, was pronounced.

## Claims

1. A method for the production of an improved rosin ester composition comprising: (a) providing an esterified rosin by a mineral acid-catalysed esterification reaction; and (b) admixing a zinc compound selected from the group consisting of zinc hydroxide, a zinc salt of an organic acid and mixtures thereof in order to neutralize residual mineral acid catalyst.

2. The method of claim 1 wherein the zinc compound is added subsequent to the esterification step a).

3. The method of claim 1 wherein the zinc compound is added during the esterification step a).

4. The method of any preceding claim, wherein said zinc compound comprises a zinc salt of an organic acid, preferably zinc resinate.

5. The method of any preceding claim, wherein said zinc compound is admixed in an amount effective to neutralize a major portion of any residual acid catalyst present in the rosin ester.

6. The method of any preceding claim, wherein said zinc compound is admixed in an amount effective to neutralize at least seventy-five percent of any residual acid catalyst present, preferably in an amount effective to neutralize substantially all residual acid catalyst present.

7. The method of claim 5 or claim 6, wherein the residual acid catalyst present comprises a mineral acid ester.

8. Use of a composition as a tackifier for hot melt adhesives having diminished tendency toward hazing and improved viscosity stability when incorporated in said adhesives, said composition comprising rosin esterified with polyhydric alcohol and neutralized with a zinc compound selected from the group consisting of zinc hydroxide, zinc salts of organic acids and mixtures thereof.

9. A hot melt adhesive comprising as a tackifier a zinc neutralised rosin ester composition obtainable by a method according to any of claims 1 to 7.

10. Use of a zinc compound selected from the group consisting of zinc oxide, zinc hydroxide, zinc salts of organic acids and mixtures thereof to neutralize residual mineral acid catalyst in a rosin ester composition formed by the mineral acid-catalysed esterification of rosin with alcohol.

## Patentansprüche

1. Verfahren zur Herstellung einer verbesserten Harzester-Zusammensetzung, umfassend: (a) die Bereitstellung von verestertem Colophonium durch eine Mineralsäure-katalysierte Veresterungsreaktion; und (b) das Zumischen einer Zinkverbindung, ausgewählt aus der aus Zinkhydroxid, einem Zinksalz einer organischen Säure und Mischungen davon bestehenden Gruppe, um restlichen Mineralsäure-Katalysator zu neutralisieren.

2. Verfahren nach Anspruch 1, in welchem die Zinkverbindung anschließend an die Veresterungsstufe (a) zugesetzt wird.

3. Verfahren nach Anspruch 1, in welchem die Zinkverbindung während der Veresterungsstufe (a) zugesetzt wird.

4. Verfahren nach irgendeinem vorangehenden Anspruch, in welchem die Zinkverbindung ein Zinksalz einer organischen Säure, vorzugsweise Zinkresinat, umfaßt.

5. Verfahren nach irgendeinem vorangehenden Anspruch, in welchem die Zinkverbindung in einer Menge zugemischt wird, die für die Neutralisation eines beträchtlichen Teiles irgendeines restlichen Säure-Katalysators, der im Harzester anwesend ist, wirksam ist.

6. Verfahren nach irgendeinem vorangehenden Anspruch, in welchem die Zinkverbindung in einer Menge, die für die Neutralisation von mindestens 75% jedweden restlichen anwesenden Säure-Katalysators wirksam ist, vorzugsweise in einer Menge, die für die Neutralisation von im wesentlichen des gesamten anwesenden restlichen Säure-Katalysators wirksam ist, zugemischt wird.

7. Verfahren nach Anspruch 5 oder Anspruch 6, in welchem der restliche anwesende Säure-Katalysator einen Mineralsäureester umfaßt.

8. Verwendung einer Zusammensetzung als Klebrigmacher für Heißschmelz-Klebstoffe mit verminderter Eintrübungs-Tendenz und verbesserter Viskositätsstabilität bei Einverleibung in die Klebstoffe, wobei die Zusammensetzung Colophonium, das mit mehrwertigem Alkohol verestert und mit einer aus der aus Zinkhydroxid, Zinksalzen von organischen Säuren und Mischungen davon bestehenden Gruppe ausgewählten Zinkverbindung neutralisiert ist, umfaßt.

9. Heißschmelz-Klebstoff, umfassend als Klebrigmacher eine mit Zink neutralisierte Harzester-Zusammensetzung, die durch ein Verfahren gemäß irgendeinem der Ansprüche 1 bis 7 erhältlich ist.

10. Verwendung einer aus der aus Zinkoxid, Zinkhydroxid, Zinksalzen von organischen Säuren und Mischungen davon bestehenden Gruppe ausgewählten Zinkverbindung zur Neutralisation von restlichem Mineralsäure-Katalysator in einer Harzester-Zusammensetzung, die durch die Mineralsäure-katalysierte Veresterung von Colophonium mit Alkohol gebildet wurde.

## Revendications

1. Procédé pour la production d'une composition d'ester de colophane améliorée comprenant : (a) la production d'une colophane estérifiée par une réaction d'estérification catalysée par un acide minéral ; et (b) le mélange d'un composé de zinc choisi parmi l'hydroxyde de zinc, un sel de zinc d'un acide organique et des mélanges de ceux-ci afin de neutraliser le catalyseur d'acide minéral résiduel.

2. Procédé selon la revendication 1, dans lequel le composé de zinc est ajouté après l'étape d'estérification a).

3. Procédé selon la revendication 1, dans lequel le composé de zinc est ajouté pendant l'étape d'estérification a).

4. Procédé selon l'une quelconque des revendications précédentes, dans lequel ledit composé de zinc comprend un sel de zinc d'un acide organique, de préférence du résinate de zinc.

5. Procédé selon l'une quelconque des revendications précédentes, dans lequel ledit composé de zinc est mélangé dans une quantité efficace pour neutraliser une majeure partie de tout catalyseur d'acide résiduel présent dans l'ester de colophane.

6. Procédé selon l'une quelconque des revendications précédentes, dans lequel ledit composé de zinc est mélangé dans une quantité efficace pour neutraliser au moins 75 % de tout catalyseur d'acide résiduel présent, de préférence dans une quantité efficace pour neutraliser pratiquement la totalité du catalyseur d'acide résiduel présent.

7. Procédé selon la revendication 5 ou la revendication 6, dans lequel le catalyseur d'acide résiduel présent comprend un ester d'acide minéral.

8. Utilisation d'une composition en tant qu'élément communiquant l'adhérence pour des adhésifs thermofusibles présentant une tendance réduite à la formation de voile et une stabilité de la viscosité améliorée lorsqu'elle est incorporée dans lesdits adhésifs, ladite composition comprenant de la colophane estérifiée avec un alcool polyvalent et neutralisée avec un composé de zinc choisi parmi l'hydroxyde de zinc, des sels de zinc d'acides organiques et des mélanges de ceux-ci.

9. Adhésif thermofusible comprenant en tant qu'élément communiquant l'adhérence une composition d'ester de colophane neutralisée au zinc pouvant être obtenue par un procédé selon l'une quelconque des revendications 1 à 7.

10. Utilisation d'un composé de zinc choisi parmi l'oxyde de zinc, l'hydroxyde de zinc, des sels de zinc d'acides organiques et des mélanges de ceux-ci pour neutraliser un catalyseur d'acide minéral résiduel dans une composition d'ester de colophane formée par l'estérification catalysée par un acide minéral de colophane avec un alcool.
